# EUROPEAN PATENT APPLICATION

(11) **EP 2 728 319 A2**
(43) Date of publication of application: **07.05.2014**
(21) Application number: 13190985.5
(22) Date of filing: 31.10.2013
(51) Int. Cl.: G01F 23/38

(54) **Contactless liquid level sensor**

(30) Priority: 01.11.2012 US 201261721156 P; 23.10.2013 US 201314061309
(71) Applicant: TI Group Automotive Systems, L.L.C., Auburn Hills, MI 48326 (US)
(72) Inventor: Forgue, John R., Cheshire, CT Connecticut 06410 (US)
(74) Representative: Von Kreisler Selting Werner - Partnerschaft von Patentanwälten und Rechstanwälten mbB

(57) **Abstract**

In at least some implementations, a liquid level sensor includes a liquid level responsive member, first and second circuit elements and a magnetic field member. One circuit element generates a magnetic field and the other is responsive to the magnetic field. The magnetic field member is responsive to movement of the liquid level responsive member and alters, in at least some positions of the magnetic field member, at least one characteristic of the magnetic field experienced by the second circuit element as a function of the position of the magnetic field member. The magnetic field experienced by the second circuit element can be correlated to a position of the magnetic field member which can be correlated to a position of the liquid level responsive member to provide an indication of the liquid level in the tank.

## Description

### Reference to Copending Application

This application claims the benefit of U.S. Provisional Patent Application Serial No. 61/721,156 filed November 1, 2012 and U.S. Non-Provisional Patent Application Serial No. 14/061,309 filed October 23, 2013, which are incorporated herein by reference in its entirety.

### Technical Field

The present disclosure relates generally to a position sensor, such as a level sensor for detecting the amount of liquid remaining in a reservoir.

### Background

Fuel level sensors have historically relied on mechanical contacts. For example, the sensor may have several components including a level arm. One end of the level arm may carry a float which rests on the surface of the fuel and moves as the fuel level increases or decreases. The other end of the level arm may have a wiper that engages and moves along a resistor path to change the resistance in the level sensor circuit and thereby to detect the position of the float which corresponds to the level of fuel in a fuel tank. These types of contact-based level sensing devices may become worn and contaminated resulting in sensor error and component failure.

### Summary

In at least some implementations, a liquid level sensor for determining the level of liquid in a tank includes a liquid level responsive member that moves as the level of liquid in the tank changes, a first circuit element, a second circuit element and a magnetic field member. The first circuit element generates a magnetic field, and the second circuit element is responsive to the magnetic field. The magnetic field member is responsive to movement of the liquid level responsive member for movement in response to movement of the liquid level responsive member. Movement of the magnetic field member relative to one or both of the first and second circuit elements alters, in at least some positions of the magnetic field member, at least one characteristic of the magnetic field experienced by the second circuit element as a function of the position of the magnetic field member. The magnetic field experienced by the second circuit element can be correlated to a position of the magnetic field member which can be correlated to a position of the liquid level responsive member to provide an indication of the liquid level in the tank.

Some implementations also or instead provide a method of determining the level of liquid in a tank. The method includes generating a magnetic field at a first circuit element, experiencing the magnetic field at a second circuit element, and determining the level of liquid in a tank based on the magnetic field experienced at the second circuit element. A magnetic field member moves relative to the first circuit element, wherein its movement alters in at least some positions at least one characteristic of the magnetic field experienced by the second circuit element. The magnetic field member may move in response to the movement of a liquid level responsive member which moves as the level of liquid in the tank changes. In such an implementation, the position of the magnetic field member can be correlated to a position of the liquid level responsive member to provide an indication of the liquid level in the tank.

### Brief Description of the Drawings

The following detailed description of exemplary embodiments and best mode will be set forth with reference to the accompanying drawings, in which:

FIG. 1 is a partial sectional view of a fuel tank assembly;

FIG. 2A is an enlarged perspective view of a portion of FIG. 1 illustrating a level sensor assembly (LSA);

FIG. 2B is a simplified fragmentary sectional view of the LSA of FIG. 2A;

FIG. 2C is an electrical circuit diagram of the LSA shown in FIGS. 2A-2B;

FIG. 2D is a perspective view of a wire coil;

FIG. 3A is a perspective view of a portion of another implementation of a level sensor assembly (LSA);

FIG. 3B is a simplified fragmentary sectional view of the LSA shown in FIG. 3A;

FIG. 3C is an electrical circuit diagram of the LSA shown in FIGS. 3A-3B;

FIG. 4 is a simplified fragmentary sectional view of another implementation of the LSA shown in FIG. 2B;

FIG. 5A is a simplified fragmentary sectional view of another implementation of the LSA shown in FIG. 2B;

FIG. 5B is a side view along section lines 5B-5B of FIG. 5A and FIG. 9;

FIG. 6A is a simplified fragmentary sectional view of another implementation of the LSA shown in FIG. 2B;

FIG. 6B is a side view along section lines 6B-6B of FIG. 6A;

FIG. 7A is a simplified fragmentary sectional view of another implementation of LSA shown in FIG. 2B;

FIG. 7B is a side view along section lines 7B-7B of FIG. 7A;

FIG. 8A is a simplified fragmentary sectional view of another LSA;

FIG. 8B is an electrical circuit diagram of the LSA shown in FIG. 8A;

FIG. 9 is a simplified fragmentary sectional view of another implementation of the LSA shown in FIG. 8A;

FIG. 10 is a simplified fragmentary sectional view of another implementation of the LSA shown in FIG. 8A;

FIG. 11 is a flow chart depicting a method that can be used by the LSA shown in FIG. 2A; and

FIG. 12 is a flow chart depicting a method that can be used by the LSA shown in FIG. 8A.

### Detailed Description of Presently Preferred Embodiments

The present disclosure relates generally to a fluid or liquid level sensor for a fluid reservoir, such as a fuel tank for a vehicle. The level sensor may be mounted within the fuel tank and may be coupled to a fluid level responsive member that is responsive to changes in the fluid level in the reservoir, such as a float that remains on or near the surface of the fluid. In this implementation, a float moves up and down as the amount of fuel remaining in the tank changes. In at least one instance, the level sensor may be a noncontact sensor having first and second coils and a magnetic field member which in at least certain embodiments may include or be defined by a shield. The two coils may be generally arranged as a transformer; e.g., when a first voltage is applied across the first coil, the second coil may be spaced from and located with respect to the first coil so that a second voltage is induced therein. The sensor may be configured so that as the float moves up and down, the magnetic field member moves relative to the two coils and the voltage induced in the second coil changes accordingly. The voltage induced in the second coil may be measured and correlated to a level of fuel in the tank.

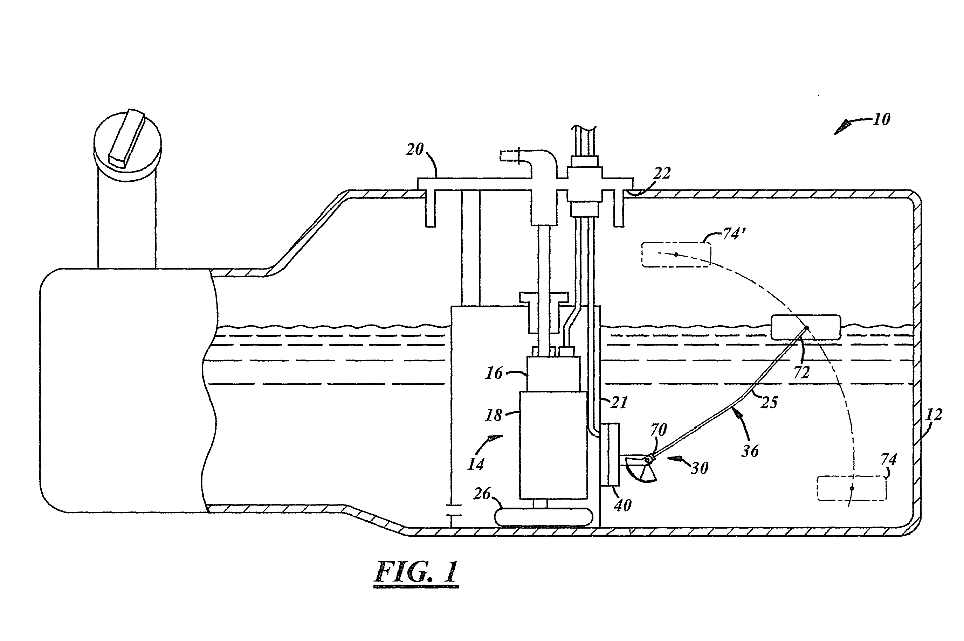

Referring in more detail to the drawings, FIG. 1 illustrates a fuel tank assembly 10 having a fuel tank 12 for holding fuel and a fuel pump assembly 14 for pumping fuel from the tank to an engine (not shown). The fuel pump assembly 14 includes a fuel pump 16 enclosed within and/or carried by a housing 18, and both the fuel pump 16 and housing 18 may be at least partially located within a reservoir or swirl or slosh pot 21. The housing 18 may include a flange 20 which may mate to or adjoin to a corresponding flange region 22 on the fuel tank 12. The pump 16 may draw fuel through a filter 26 and discharge fuel under pressure through an outlet conduit that leads out of the tank. A fuel level sensor assembly (LSA) 30 may be coupled to the housing 18, to the flange 20, to the slosh pot 21 (as shown), to the interior walls of the tank, to any skeletal or carrier structure therein, or to any other suitable appurtenances located within the interior of or adjacent to the fuel tank 12 (e.g., at, near, or on the interior walls of the fuel tank).

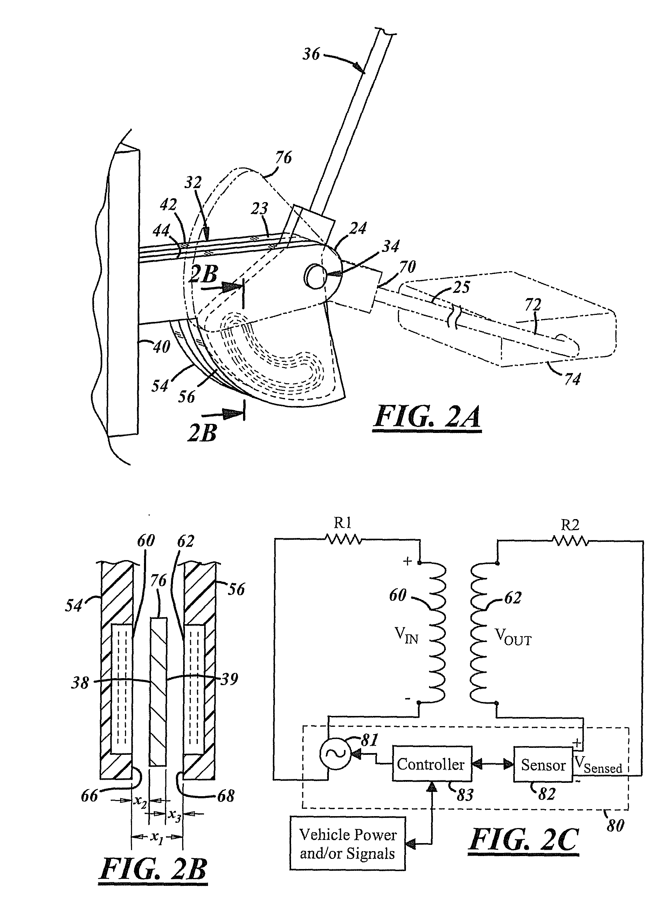

The LSA 30 in FIGS. 1, 2A-2D illustrate merely one implementation and it will be appreciated that other implementations are also possible. The LSA 30 may include a mount 32, an axle 34, and a float arm assembly 36 (FIG. 2A).

The mount 32 may include a base 40 for coupling to the slosh pot 21 and a first arm 42 and a second arm 44 - the arms 42, 44 may carry the float arm assembly 36. The base 40 may be any suitable mechanism for coupling the LSA to the slosh pot 21. The first and second arms 42, 44 generally may be vertically-oriented, plate-like members and may extend in parallel outwardly from the base 40 to distal ends 23, 24. The two arms may have inwardly and outwardly facing surfaces, the inwardly facing surfaces being spaced from one another at a gap or distance *x₁*, adequate to allow rotation of the float arm assembly 36 therebetween. Each arm 42, 44 may have a means for carrying the rotatable float arm assembly (e.g., near the distal ends 23, 24 of each arm 42, 44, an aperture may extend from the inwardly facing surface to the outwardly facing surface). The apertures may be sized to support and carry the axle 34 upon which the float arm assembly 36 may pivot. When the axle 34 is assembled therein, it may be perpendicular to the inwardly facing surfaces of the arms 42, 44. It should be appreciated that aforedescribed mount 32 is merely one implementation and that other implementations are also possible.

The arms 42, 44 may each have a flange or lobe 54, 56 extending downwardly located between the base 40 and the distal ends 23, 24 (or near the distal ends). The flanges also may be plate-like members and may also be spaced from one another at a distance *x₁*. Each flange 54, 56 may have inwardly facing surfaces 66, 68 (FIG. 2B) that are flat or have various shapes and contours (e.g., the surfaces may have a recess or other cavity).

The mount 32 (including its arms, flanges, etc.) may be comprised of any electrically nonconductive material(s). For example, the mount may be manufactured from a polymer such as polyoxymethylene (POM). In addition, the various features or portions of the mount may be formed in the same piece of material or from different pieces of material.

Turning to the float arm assembly (FIG. 2A), the float arm assembly 36 may include an arm 25 having a magnetic field member, shown as shield 76. In the implementation shown, the shield 76 is located at or near a first or proximal end 70 of the arm 25 and has one or more floats 74 located near a second or distal end 72. The arm 25 may have a hole therethrough near the first end 70, the hole being sized for the axle 34 to pass therethrough about which the float arm assembly 36 may pivotally rotate. In the implementation shown, the shield 76 is a vertically-oriented plate-like member having a first side 38 and a second side 39 (see FIG. 2B) that extends radially outwardly from the first end 70. The shield 76 may be generally pie-shaped as illustrated in FIG. 2A (however, other suitable shapes will be appreciated by skilled artisans). The thickness of the shield may be less than distance *x₁*; e.g., it may be sized to fit without physical contact between the arms 42, 44 and the flanges 54, 56. The float 74 may be any object buoyant in the liquid with which it is used (such as fuel). The float may float at or near the surface of the liquid in the tank so that as the float moves up and down within the tank (e.g., due to changes in the liquid level), the float arm assembly rotates or pivots about the axle 34. As the assembly 36 pivots thereabout, the shield may partially or completely move in and out from between the flanges 54, 56. The arm 25 may be straight, bent, curved, or any combination thereof to accommodate the shape of the fuel tank.

The float arm assembly 36 may be made of various materials. For example in at least one implementation, the shield 76 may be comprised of any conductive or partially electrically conductive material (e.g., 304 stainless steel). And in some implementations, the first end 70 of the arm 25 may be any nonconductive material (e.g., POM). The rest of the float arm assembly, including the float and the remainder of the arm, may be a plastic or metal (e.g., stainless steel).

The flanges 54, 56 may carry a first circuit element 60 and a second circuit element 62 on the inwardly facing surfaces 66, 68 of the flanges, respectively, arranged so that they are adjacent to the shield 76 (FIG. 2B). As shown in the implementation illustrated in FIG. 2B, the first and second circuit elements 60, 62 may be inlaid (or partially inlaid) within the flanges 54, 56 at the inwardly facing surfaces 66, 68, e.g., in a recess; however this is not necessary - e.g., the circuit elements 60, 62 also may be surface mounted or partially or fully encapsulated within the flanges 54, 56 and facing or aligned in any direction. In one implementation, the first circuit element 60 may be an inductive coil (more specifically, a driving coil), and the second circuit element 62 may be another inductive coil (more specifically, a pickup or sensing coil). The term driving coil as used herein includes a coil of wire or an etched coil on a printed circuit card assembly which is provided a voltage and/or a current in order to generate a magnetic field. The term pickup coil as used herein includes a coil of wire or an etched coil on a printed circuit card assembly which may receive and be acted upon by the magnetic field induced by the driving coil or another magnetic device. In at least some implementations, the first circuit element may be any element capable of generating a magnetic field and the second circuit element may be any element capable of being responsive in some way to the magnetic field. The shield may be anything capable of altering the magnetic field in a manner detectable at the second circuit element and relative to or as a function of the liquid level. While it is not functionally essential, both the driving coil and the pickup coil in FIGS. 2A-2B may be identical; thus, only one will be described herein.

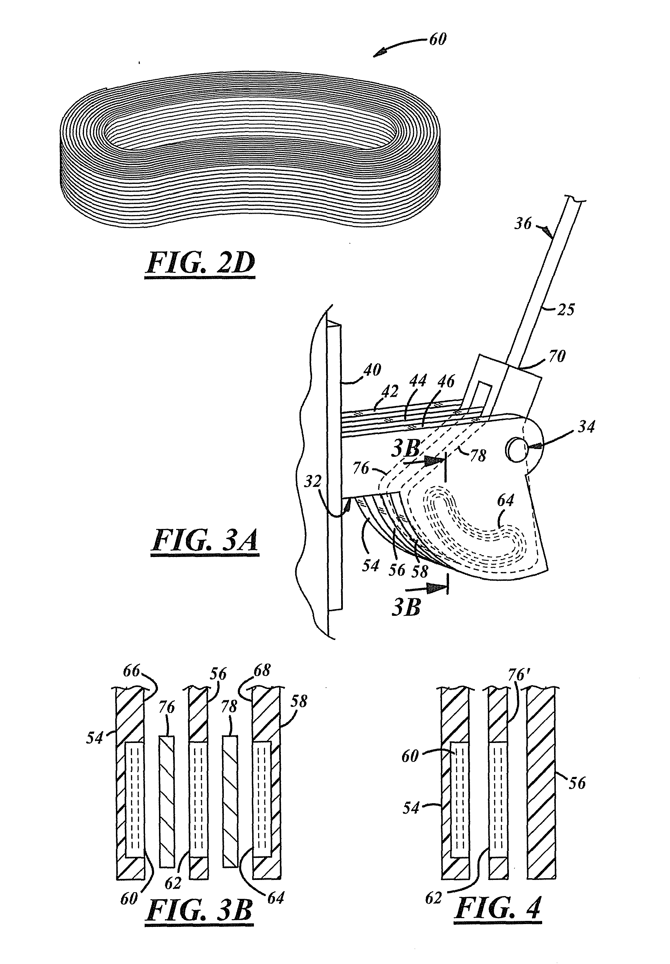

In one implementation, the driving coil may have multiple, stacked layers of flat spiraled coil or windings (FIG. 2D). For example, the driving coil may have 12 layers of wire of 28 AWG (American Wire Gauge) each having 13 turns (hence, a total of 156 turns). The number of layers (L) may vary and the number of turns (N) may vary; e.g., 1 ≤ L ≤ 25 and 10 ≤ N ≤ 1000. In addition, the gauge of the wire (or traces) may vary; e.g., 20 AWG ≤ gauge ≤ 40 AWG. The center of the coil may be open or hollow therethrough. This arrangement is merely one example; the driving coil also may have a different number of total turns and/or the layers may be flat or otherwise. The coil may be comprised of copper, iron, or any other suitable conductive material. In FIG. 2D, the shape of the driving coil is kidney-shaped; however, the shape may vary (e.g., it may be circular, wedge-like, triangular, or otherwise shaped).

At least one implementation of the coils may be defined by a value of A where A defines a relationship of the number of windings (N1) of the driving coil and the number of windings (N2) of the pickup coil; e.g., A may be approximately k * N1/N2, where k is a coefficient of coupling (or transfer efficiency factor) and 0.01 < k < 1. In at least one implementation, the value of A may be approximately 0.5; and in other cases may be a value between 0.1 and 10.

FIG. 2C illustrates an electrical circuit diagram for the implementation shown in FIGS. 2A-2B. FIG. 2C illustrates a magnetically coupled (or mutually-inductively coupled) first circuit element 60 and second circuit element 62. Both elements 60, 62 are coupled independently to a power and control module 80 - the elements 60, 62 are in series with (optional) resistive elements R1, R2, respectively (it will be appreciated that R1 and R2 may be representative of actual resistors, the resistive values of the wires or traces, and/or any other resistive circuit elements). The module 80 may include a power source (e.g., a signal or waveform generator) 81, a sensor 82, and a controller 83. In one implementation, the power source 81 may provide a steady-state alternating current (AC) voltage (V_{AC}) [e.g., V_{AC} = V_{IN} + V_{R1}, where V_{IN} is the voltage across the driving coil and V_{R1} is the voltage across the resistive element R1] at a frequency *f*. The power source 81 could also provide a pulsed current or voltage (alternating or otherwise) or other non-steady-state power. The sensor 82 may include any device or circuit component for detecting changes in current and/or voltage (e.g., a meter) - thus, the sensor 82 may receive and/or determine a sensed voltage (V_{SENSED}) [e.g., V_{SENSED} = V_{OUT} - V_{R2}]. And the controller 83 may include any logic device or processor for controlling the sensor and power source and/or monitoring the sensed voltage.

The power and control module 80 in the electrical circuit illustrated in FIG. 2C may be carried by the mount 32, the fuel pump assembly 14, elsewhere on the tank 12, or e.g., on any vehicle carrying the tank 12.

In operation, as a result of the induced voltage (V_{OUT}) across the pickup coil 62, the sensor may detect a voltage (V_{SENSED}) which may be provided to the controller 83. While the module 80 is providing V_{AC} and sensing V_{SENSED}, the shield 76 of the float arm assembly 36 may move partially and/or completely between the coils 60, 62 according to changes in the amount of fuel remaining in the tank. Since the shield 76 is made of conductive material, it will interfere with the amount of voltage induced at the pickup coil 62 (V_{OUT}) - e.g., the amount of magnetic flux at the pickup coil being a function of the degree to which the shield is therebetween. FIG. 1 illustrates that the float 74 may be in a lower position (e.g., when the tank is EMPTY) and in an upper position 74' (e.g., when the tank is FULL) - and is intended to convey that it may be in any position therebetween. Thus at the other end of the float arm assembly, the shield may be entirely between the coils 60, 62 (e.g., when the tank is FULL), partially between the coils (e.g., when the tank is PARTIALLY FULL), or not between the coils at all (e.g., when the tank is EMPTY). Thus, using the controller 83, a plurality of positions of the shield (according to variations in voltage, V_{SENSED}) may be correlated to a plurality of differing amounts or volumes of fuel remaining in the tank.

As shown in FIG. 2B and in at least one embodiment of the fluid level sensor, the shield 76 may be spaced so that when it is between the flanges 54, 56, it is spaced at a distance *x₂* and *x₃,* respectively. The distance *x₂* may be the distance between the inside surface 66 of the first flange and the first side 38 of the shield 76; and the distance *x₃* may be the distance between the inside surface 68 of the second flange and the second side 39 of the shield 76. The distances *x₂* and *x₃* may or may not be equal; i.e., the sensor may be operative even if the shield 76 is offset and not centered between the circuit elements 60, 62. For example, *x₂* may be between 0.5 mm and 1.5 mm and *x₃* may be between 0.5 mm and 1.5 mm. In addition, the sides 38, 39 of the shield may have a greater surface area than the circuit elements 60, 62 (facing each other). In one implementation, the perimeter of the shield may extend radially outwardly at least 10 mm more than the circuit elements 60, 62 further limiting the strength of the magnetic field experienced at the pickup coil.

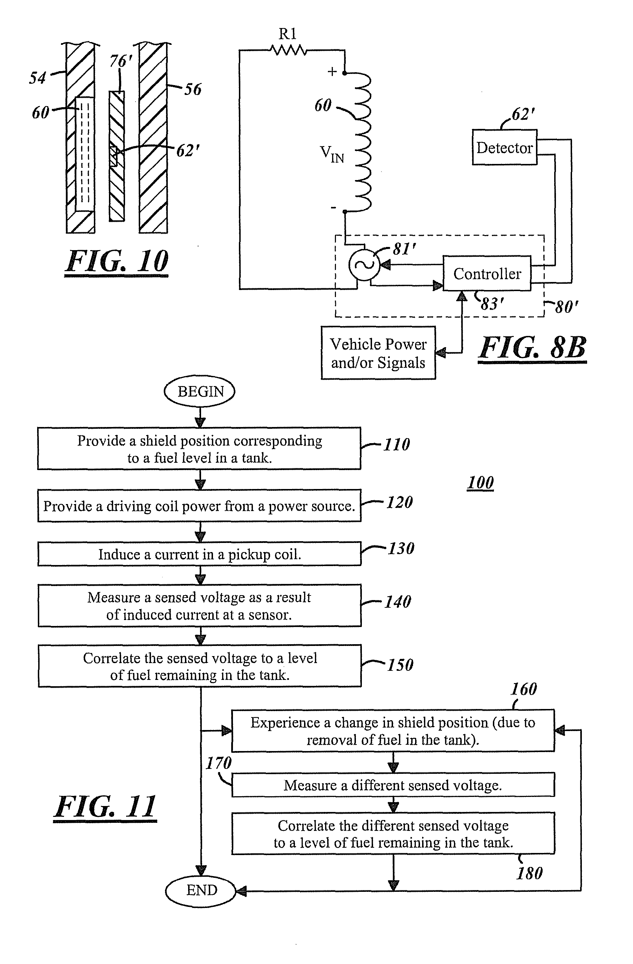

One method of operation 100 (FIG. 11) will now be described for the fluid level sensor shown in FIGS. 2A-2D. The method begins at step 110 where the shield 76 is provided, which may move between the first and second circuit elements 60, 62 as the level of fuel in the fuel tank changes; the first and second circuit elements may be a driving coil and a pickup coil, respectively, and may be in proximity to one another. The position of the shield may correspond to the instantaneous level of fuel in a fuel tank. At step 120, a voltage (V_{AC}) is provided from the power source 81 to the driving coil 60. This may result in a voltage drop (V_{IN}) across the driving coil 60 which may generate a magnetic field and cause an electromotive force at the pickup coil 62. Thus, the electromotive force may generate an induced current in the pickup coil 62 and as a result, a voltage across this coil (V_{OUT}) [step 130]. At step 140, via the sensor 82, the power and control circuit 80 may determine a sensed voltage (V_{SENSED}) which may be equivalent to (V_{OUT}) minus the voltage across any resistive elements in series with the pickup coil (e.g., R2). At step 150, via the controller 83, the sensed voltage may be correlated to a level of fuel remaining in the tank. Hereafter, the method may end or may continue to step 160. At step 160, the shield 76 may laterally move between the coils 60, 62 to varying extents as the fuel level changes the angular orientation of the float arm 25 relative to the mount 32 (e.g., fuel may be added or removed from the tank). Angular displacement or changes in position of the shield 76 between the coils 60, 62 may result in changes in magnitude of the magnetic field strength experienced at the pickup coil. Therefore, the magnitude of the induced current may vary (e.g., be smaller) and the resulting magnitude of the voltage (V_{OUT}) may also vary (e.g., be smaller). As a result of the shield's displacement, at step 170, the sensor 82 in the power and control circuit 80 may measure a new value of V_{SENSED} which may correlate to a different level of fuel remaining in the tank. Steps 160-180 may be repeated.

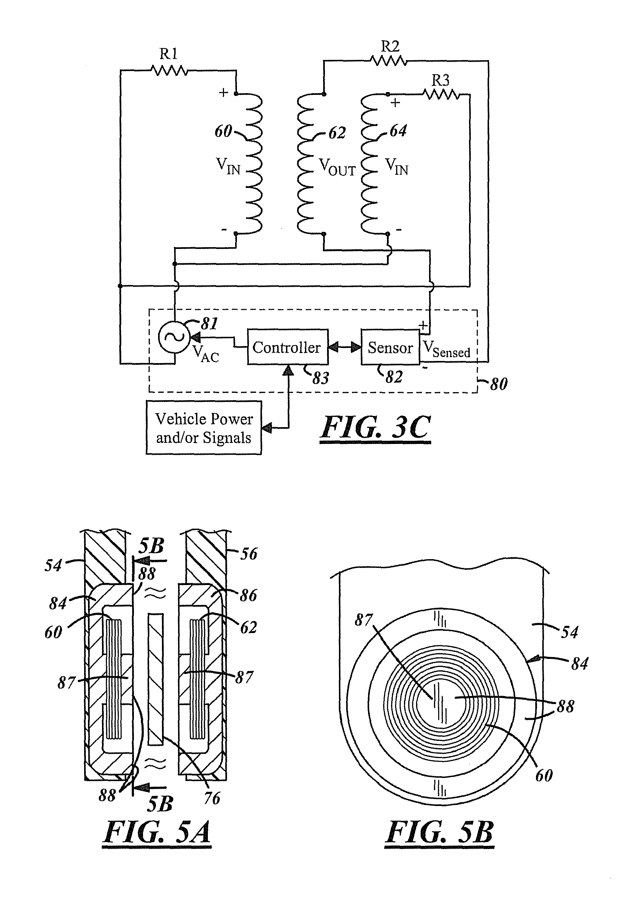

Other implementations of the LSA are shown in FIGS. 3-10. For example, FIGS. 3A-3B illustrate a level sensor that has two shields. More specifically, two shields may be carried by the float arm 25 near the first end 70. The shields may be of similar shape, size, and electrically conductive material. In addition, the mount 32 may have three arms 42, 44, 46 extending outwardly from the base 40. The third arm 46 may be plate-like and may be parallel to the first and second arms 42, 44 such that the second arm 44 is interposed between the first and third arms. Furthermore, a third flange 58 may similarly be a plate-like member extending downwardly from the third arm 46 parallel with the flanges 54, 56. The first and second circuit elements 60, 62 (carried by the first and second flanges 54, 56) may be coils as previously described; and a third circuit element 64 that may be carried by the third flange 58 also may be a coil. In this arrangement, the first and third circuit elements 60, 64 may be driving coils and the second circuit element 62 may be a pickup coil that is acted upon by the magnetic field generated by the two driving coils. In one implementation (and as best illustrated in FIG. 3B), the coil 62 may be exposed to both the first and second shields 76, 78 - e.g., the second flange may have an opening therethrough which is sized to carry the coil 62 exposing the coil 62 on both sides of the flange 56. Exposure of the pickup coil 62 to both shields and both driving coils 60, 64 may provide a more evenly distributed electromagnetic inductance (i.e., since the magnitude of the magnetic field strength diminishes as the distance from the source increases, i.e., the driving coil, the magnitude of the field strength may vary slightly at regions of the pickup coil (e.g., it may be less at regions of the pickup coil farthest from the driving coil than at regions of the pickup coil nearest the driving coil) - thus, the electromagnetic inductance (or electromagnetically induced current) may not be evenly distributed. However, where driving coils are located on both sides of the pickup coil, this uneven distribution may be mitigated, particularly where the two driving coils are generally equidistant from the pickup coil.

FIG. 3C illustrates an electrical circuit diagram for the implementation show in FIGS. 3A-3B. The power and control module 80 (including power source 81, sensor 82, and controller 83) is shown with three circuit elements 60, 62, 64 (e.g., coils) and three resistive elements R1, R2, R3 (as before, it will be appreciated that R1, R2, and R3 may be representative of actual resistors, the resistive values of the wires or traces, and/or any other resistive circuit elements). In two parallel circuit loops, the coils 60 and 64 and resistors R1, R3, respectively, are coupled to the power source 81. In a third circuit loop, the coil 62 and R2 are coupled to the sensor 82. In this arrangement, a single power source 81 may provide a voltage to both coils 60, 64, and the voltage resulting from the current induced in coil 62 may be determined based upon the voltage sensed at sensor 82, as previously discussed.

In the implementation shown in FIGS. 3A-3C, as the level of fuel in the tank changes, the (first) shield 76 may be rotated via the arm 25 to a position between the first and second flanges 54, 56 (and thus the coils 60, 62) while the second shield 78 simultaneously may be rotated to a position between the second and third flanges 56, 58 (and thus the coils 62, 64). In operation, the implementation shown in FIGS. 3A-3B may be similar to that described in method 100; however, electromotive force experienced at the second coil 62 may be greater than it would be in an implementation having only one driving coil (e.g., where all other elements and aspects of the circuit are otherwise the same).

Other variations or implementations of the LSAs of FIGS. 2A-2C and 3A-3C (and other implementations disclosed herein) may include instances where shield(s) are stationary (i.e., are coupled to and extend from the base 40) while the flanges and their respective circuit elements move (i.e. are coupled to the float arm assembly 36).

Now turning to another implementation, FIG. 4 illustrates the first and second flanges 54, 56 and a shield 76'. In this implementation, the first flange 54 and first circuit element 60 may be similar as in the aforedescribed implementations (including i.e., the circuit element 60 being a driving coil). The shield 76' may have the same shape, may similarly extend from, and may similarly be coupled to the float arm assembly 36 as the shield 76; however, the shield 76' may be comprised of a nonconductive material (e.g., plastic or polymer). In addition, the shield 76' may carry the second circuit element 62 - which may be a pickup coil. Here, the second flange 56 is shown but is optional.

The implementation shown in FIG. 4 may operate using the circuit illustrated in FIG. 2C. The voltage V_{AC} may be the same; and thus, changes in the magnetic field experienced at the pickup coil 62 may occur due to the movement of the pickup coil laterally relative to the driving coil 60 (e.g., as the fuel level changes causing a change in the angular orientation of the arm 25 of the float arm assembly relative to the mount 32) instead of by movement of a shield (e.g, 76) relative to two coils 60, 62.

The implementation shown in FIGS. 5A and 5B is the same as that shown in FIGS. 2A-2B except for the addition of a first core element 84 and a second core element 86. In this implementation, the core elements 84, 86 may be cup-shaped or pot-shaped cores with a center post 87. The cores 84, 86 may be carried by the flanges 54, 56 extending outwardly therefrom towards one another. For example, the cores 84, 86 may be inlaid (or partially inlaid) within the flanges or may be surface mounted to the inside surfaces 66, 68 of the flanges. As will be appreciated by skilled artisans, use of a core element may increase the induced current of the pickup coil (and hence the voltage across the coil) in localized areas or flux regions 88 - e.g., at the periphery of the cup-shaped cores 84, 86 and at the center post 87. In some implementations, the shield 76 may be shaped and sized so when the shield is directly between the coils 60, 62 it does not interfere with the magnetic field between the periphery of the core elements; however, this is not necessary.

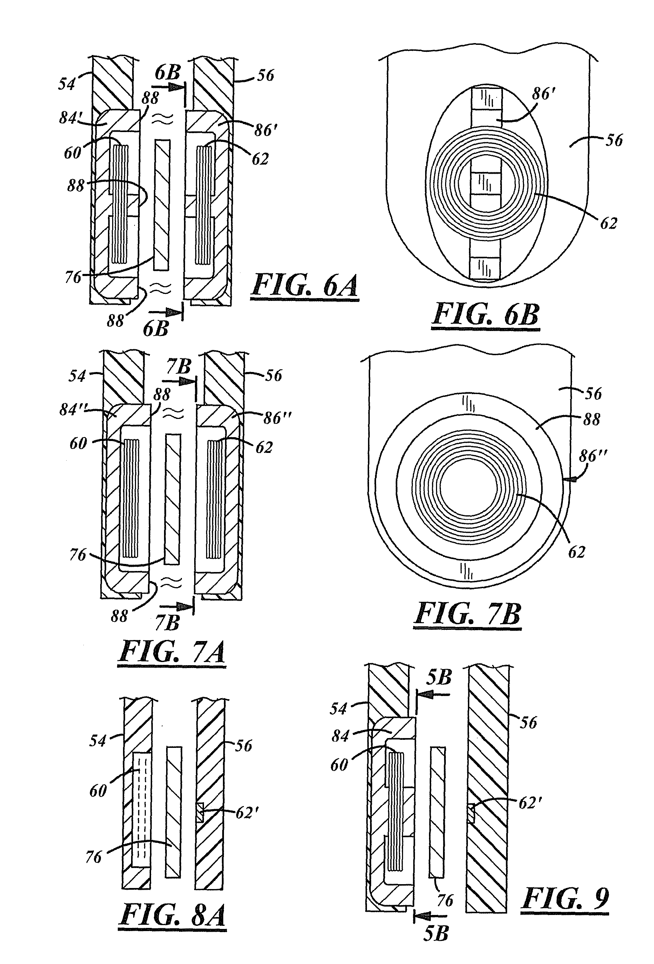

Another implementation is shown in FIGS. 6A and 6B; however, the first and second core elements 84', 86' are E-shaped cores instead of cup-shaped cores. The assembly and operation of this implementation are otherwise the same as that of FIG. 5A.

Another implementation is shown in FIGS. 7A and 7B; however, the first and second core elements 84", 86" are cup-shaped cores without a center post. The assembly and operation of this implementation are otherwise the same as that of FIG. 5A.

Other implementations are also possible, e.g., the first and second core elements may merely be the center posts without any cup-shaped or E-shaped component. And the core elements may have shapes other than those previously described. In some implementations, it may be desirable to use core elements that are shaped to linearize the magnetic field experienced at the second circuit element relative to the position of the shield; e.g., each angular change (α) of the shield position between the first and second circuit elements results in a magnitude change (*M*) in the magnetic field experienced at the second circuit element - or each α change approximately results in change M.

Now turning to FIG. 8A, this implementation may include a first circuit element 60, a second circuit element 62', and a conductive shield 76 (which may be coupled to the float arm assembly moving laterally between the two circuit elements (not shown)). The first circuit element 60 may be a driving coil similar to those previously described. The second circuit element 62' may be any suitable magnetic sensor or detector that is capable of sensing a minimum or threshold magnetic field. For example, the detector 62' may turn ON, switch states, or by other means actuate allowing current to pass therethrough when it is in the presence of a magnetic field greater than or equal to a threshold strength. Therefore, the detector 62' may be in one of two states: an ON state or an OFF state. Examples of magnetic detectors include but are not limited to: coils (such as a pickup coil), Hall sensors, and thin-film resistors with magnetic properties such as a giant-magneto-resistor (GMR) and an anisotropic-magneto-resistor (AMR).

FIG. 8B illustrates an electrical circuit diagram for the implementation shown in FIG. 8A. FIG. 8B shows a circuit loop coupled to a power and control module 80' having a power source 81' and a controller 83'; the loop has in series a driving coil 60, a resistive element R1, and a power source 81' within the module 80'. The module 80' is also coupled to another circuit loop having the detector 62'. The voltage of the power source 81' may be variable rather than steady-state; furthermore, the voltage may be direct or alternating (V_{AC/DC}). Thus, the power source may be coupled across R1 and coil 60. FIG. 8B also illustrates that the controller may have a feedback loop from the power source - e.g, so that the controller does not merely control the ON/OFF state of the power source, but may also control and receive feedback as to the magnitude of the power source voltage.

During operation of the implementation illustrated in FIGS. 8A-8B, the position of the shield relative to the coil 60 and detector 62' will vary as the fuel level in the tank varies. Hence, in different positions the shield will block or interfere with, to varying degrees, the magnetic field communicated to the detector 62'. When the shield is in a position providing more interference with the magnetic field generated by coil 60, a higher voltage may be provided by the power source 81' to produce a greater magnetic field at the detector 62' (and thereby trigger it to change states; e.g., ON/OFF). And when the shield interferes less with the generated magnetic field, a lower voltage from the power source may produce an adequate magnetic field to trigger the detector 62'. Therefore, the voltage from the power source 81' needed to trigger the detector 62' can be correlated to a position of the shield which is a function of the fuel level in the tank.

Thus, in one implementation, the detector 62' may be in an OFF state, and an initial voltage from the power source (V_{AC/DC}) may be provided to the driving coil 60 (V_{IN}). When driven by the initial voltage, the coil voltage (V_{IN}) may generate a magnetic field insufficient in magnitude to be sensed by the detector 62'. Having determined that the detector 62' is OFF, the controller 83' may incrementally increase the voltage at the power source 81' to increase the V_{IN} magnitude and also the generated magnetic field until the detector 62' switches to an ON state. The magnitude of the V_{AC/DC} voltage may be associated by the controller with a particular position of the shield which in turn may be correlated to a volume of fuel within the tank. As fuel is removed from the tank, the float arm assembly 36 pivots (as previously described) and the shield provides less interference with the generated magnetic field provided to the detector 62'. With less interference by the shield, the magnitude of the power source 81' required to actuate the detector 62' decreases. In one implementation, the power source may momentarily switch OFF to allow the detector 62' to reset or switch to the OFF state (e.g., the switching OFF of the power source may be performed at predetermined intervals). This process may be repeated as often as desired to determine the instantaneous fuel level.

In another implementation, the mount 32 may be designed so that the shield 76 is more between the circuit elements 60, 62' when the tank is empty and the shield is less between the circuit elements 60, 62' when the tank is full. In one example, the flanges 54, 56 carrying the circuit elements 60, 62' may extend upwardly from the arms 42, 44 (not shown). In this implementation, as the level of fuel in the tank decreases, the shield 76 provides greater magnetic interference between the circuit elements 60, 62'. Once the magnetic field experienced at the circuit element 62' decreases to a threshold magnitude, the detector 62' resets or switches to the OFF state. As in the previous implementations, the magnitude of the V_{AC/DC} voltage may be associated by the controller 83' with a particular position of the shield which in turn may be correlated to a volume of fuel within the tank. However in this implementation, it would not be necessary to momentarily switch OFF the power source 81' to allow the detector 62' to reset.

Other implementations of the second circuit element 62' exist as well. For example, the element 62' may be an analog or linear element which is responsive to varying values of magnetic field. Thus, the output (e.g., a voltage) of the element 62' may vary as it experiences varying magnetic field strengths (e.g., due to the position of the shield between the first and second circuit elements).

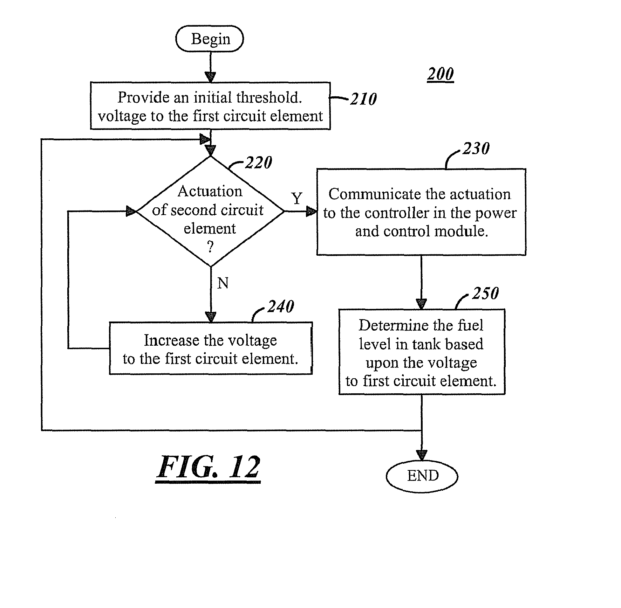

In at least one implementation, the second circuit element (detector 62') may include an inductive coil (e.g., a pickup coil) and a measuring device and may be generally operative according to method 200. The measuring device may include any device that determines the magnitude or value of an electrical characteristic (such as current, voltage, power, etc.) or any device which actuates upon receiving a threshold electrical characteristic (such as current, voltage, power, etc.). Thus, according to FIG. 12, step 220, the detector 62' or pickup coil actuates when the electrical characteristic reaches a predetermined value or threshold.

According to a method 200 of operation of the control module 80' in FIG. 8B, the method as shown in FIG. 12 may begin at step 210 where the module 80' provides an initial voltage (V_{AC/DC}) to the first circuit element 60; and the voltage across the element 60 produces a magnetic field experienced at the detector 62'. The voltage may be a predetermined voltage known to produce a magnetic field strength inadequate to trip the element 62'. At step 220, it may be determined whether the element 62' has actuated (e.g., changed states - between an ON state and an OFF state). If it has actuated, then this actuation may be communicated to the controller 83' in the module 80' [step 230]. However, if the magnetic field strength was inadequate to actuate the element 62', then the module 80' may increase the voltage V_{AC/DC} to element 60 (thereby increasing the magnetic field) [step 240]. It may then be re-determined whether the increased magnetic field strength is adequate to actuate the circuit element 62'. Steps 220 and 240 may be repeated until the detector 62' actuates and this event is communicated to the module 80' [step 230]. Each time the second circuit element 62' actuates or switches to an ON state, the module 80' may determine the fuel level in the tank 12 based on the voltage V_{AC/DC} [step 250]. The controller may be any suitable processing device, including discrete components (e.g., gate arrays, analog circuitry, etc.) and/or microprocessors. Thus, in at least one implementation, the controller may include the use of a computer program (or computer program product) or other suitable algorithm. Following this determination, the method may again repeat step 220-250 (e.g., re-determine whether the second circuit element is (or is still) actuated - i.e., it may have changed states and may no longer be actuated if the level of fuel in the tank has changed).

Thus, the various method(s) described above or parts thereof may be implemented using a computer program product and/or may include instructions carried on a computer readable medium for use by one or more processors to implement one or more of the method steps. The computer program product may include one or more software programs (or applications) comprised of program instructions in source code, object code, executable code or other formats; one or more firmware programs; or hardware description language (HDL) files; and any program related data. The data may include data structures, look-up tables, or data in any other suitable format. The program instructions may include program modules, routines, programs, objects, components, and/or the like. The computer program can be executed on one computer or on multiple computers in communication with one another.

The program(s) can be embodied on computer readable media, which can include one or more storage devices, articles of manufacture, or the like. Examples of computer readable media include computer system memory, e.g. RAM (random access memory), ROM (read only memory); semiconductor memory, e.g. EPROM (erasable, programmable ROM), EEPROM (electrically erasable, programmable ROM), flash memory; magnetic or optical disks or tapes; and/or the like. The computer readable medium may also include computer to computer connections, for example, when data is transferred or provided over a network or another communications connection. Any combination(s) of the above examples is also included within the scope of the computer-readable media. It is therefore to be understood that the method can be at least partially performed by any electronic articles and/or devices capable of executing instructions corresponding to one or more steps of the disclosed method(s).

FIG. 9 shows an alternative implementation of an LSA that is similar to the LSA shown in FIGS. 8A and 8B - the only difference may be that the first circuit element 60 is located within a first core element 84, e.g., which may be a cup-shaped core like that shown and described with respect to FIG. 5A. The module 80' illustrated in FIG. 8B may be operated to control the implementation shown in FIG. 9.

The implementation of FIG. 10 is similar to the implementation shown in FIG. 4. In FIG. 10, the first circuit element 60 is located on the first flange 54 and the shield 76' is carried by the float arm assembly 36 (as similarly described in FIG. 4). The nonconductive shield 76' (e.g., made of a plastic or polymer) similarly carries the second circuit element 62' which may be a magnetic sensor. The second flange 56 is shown, but is optional. The shield 76'may laterally move relative to the first circuit element 60 as the fuel level changes the angular orientation of the arm 25 of the float arm assembly relative to the mount 32. This changes the magnetic field experienced by the circuit element 62' as it moves relative to the circuit element 60. This change in magnetic field can be correlated to a fuel level as set forth in using the method of FIG. 12 and circuit of FIG. 8B.

Thus, several embodiments of a liquid level sensor have been described wherein power is provided to a first circuit element 60 to generate a magnetic field communicated with a second circuit element 62, 62'. A characteristic, such as the magnitude, of the magnetic field experienced by the second circuit element 62, 62' can be varied by providing a varying interference with the magnetic field and/or varying the intensity of the field initially generated. The magnitude of the magnetic field experienced by the second circuit element can be correlated to a liquid level being sensed, as set forth herein.

It is to be understood that the foregoing is a description of one or more preferred implementations of the level sensor. The disclosure is not limited to the particular embodiment(s) disclosed herein, but rather is defined solely by the claims below. Furthermore, the statements contained in the foregoing description relate to particular embodiments and are not to be construed as limitations on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims. The embodiments herein are discussed with regard to determining a "level" of liquid in a reservoir or tank, and the term "level" can mean a height of the liquid remaining in the tank which can be converted to a volume measurement in view of the shape of the tank, or "level" can simply be a measure of volume without regard to a height of liquid in the tank. That is, "level" can simply mean an amount of liquid remaining in the tank, as desired in a particular application. Further, the term "shield" is not intended to limit the innovations to any particular shape or structure of a magnetic field member. Nor should "shield" be considered to limit the innovations to a structure that reduces a magnetic field at a second circuit element as the magnetic field could be amplified/intensified or otherwise altered by the "shield" and not merely blocked or partially blocked.

As used in this specification and claims, the terms "for example," "for instance," "such as," and "like," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation.

## Claims

1. A liquid level sensor for determining the level of liquid in a tank, comprising:
a liquid level responsive member that moves as the level of liquid in the tank changes;
a first circuit element that generates a magnetic field;
a second circuit element which is responsive to the magnetic field; and
a magnetic field member responsive to movement of the liquid level responsive member for movement in response to movement of the liquid level responsive member, the magnetic field member being moveable relative to one or both of the first and second circuit elements to alter in at least some positions of the magnetic field member at least one characteristic of the magnetic field experienced by the second circuit element as a function of the position of the magnetic field member,
whereby the magnetic field experienced by the second circuit element can be correlated to a position of the magnetic field member which can be correlated to a position of the liquid level responsive member to provide an indication of the liquid level in the tank.

2. The sensor of claim 1 wherein the liquid level responsive member includes a float that is buoyant in the liquid in the tank, and an arm that carries the float.

3. The sensor of claim 2 wherein the magnetic field member is carried by the arm for movement with the arm.

4. The sensor of claim 1 wherein the magnetic field member is electrically conductive.

5. The sensor of claim 1 wherein the magnetic field member moves between the first and second circuit elements as the level of liquid in the tank changes.

6. The sensor of claim 1 wherein the first circuit element is an inductive coil and the second circuit element is a magnetic detector.

7. The sensor of claim 6 wherein the second circuit element is one or more of the following: a coiled wire, a coiled trace, a Hall sensor, or a thin-film resistor having magnetic properties.

8. The sensor of claim 6 wherein the first circuit element is a driving coil and the second circuit element is a pickup coil.

9. The sensor of claim 8 wherein the relationship between the number of windings on the driving coil (N1) and the number of windings on the pickup coil (N2) is defined by a value of A, wherein A = k * N1/N2, where k is a constant associated with transfer efficiency having a value between 0.01 and 1, wherein the value of A is between 0.1 and 10 when the gauge of the wire of the windings is greater than or equal to 20 American Wire Gauge (AWG) and less than or equal to 40 AWG.

10. The sensor of claim 1 further comprising a third circuit element that generates a magnetic field and a second magnetic field member responsive to movement of the liquid level responsive member for movement in response to movement of the liquid level responsive member, the magnetic field members being moveable relative to at least one of the first, second, and third circuit elements to alter in at least some positions of the magnetic field members at least one characteristic of the magnetic field experienced by the second circuit element as a function of the position of the magnetic field members, whereby the magnetic field experienced by the second circuit element can be correlated to a position of the first shield which can be correlated to a position of the liquid level responsive member to provide an indication of the liquid level in the tank.

11. A method of determining the level of liquid in a tank, comprising the steps of:
generating a magnetic field at a first circuit element;
experiencing the magnetic field at a second circuit element;
determining the level of liquid in a tank based on the magnetic field experienced at the second circuit element, wherein a magnetic field member moves relative to the first circuit element, wherein its movement alters in at least some positions at least one characteristic of the magnetic field experienced by the second circuit element, wherein the magnetic field member moves in response to the movement of a liquid level responsive member which moves as the level of liquid in the tank changes, wherein the position of the magnetic field member can be correlated to a position of the liquid level responsive member to provide an indication of the liquid level in the tank.

12. The method of claim 11 further comprising the step of re-determining the liquid level in the tank based upon a change in the position of the magnetic field member.

13. The method of claim 11 wherein the first circuit element is an inductive coil and the second circuit element is a magnetic detector.
